# FASCICULE DE BREVET EUROPEEN

(11) **EP 3 115 256 B1**
(45) Date de publication et mention de la délivrance du brevet: **28.05.2025**
(21) Numéro de dépôt: 16178058.0
(22) Date de dépôt: 05.07.2016
(51) Int. Cl.: B60Q 1/08, B60Q 1/12, F21S 41/675, F21S 41/365, H05B 47/115

(54) **PROCEDE DE CONTRÔLE D'UN FAISCEAU LUMINEUX ET SYSTÈME D'ECLAIRAGE CORRESPONDANT**
KONTROLLVERFAHREN EINES LICHTBÜNDELS, UND ENTSPRECHENDES BELEUCHTUNGSSYSTEM
METHOD FOR CONTROLLING A LIGHT BEAM AND CORRESPONDING LIGHTING SYSTEM

(30) Priorité: 10.07.2015 FR 1556627
(43) Date de publication de la demande: 11.01.2017
(73) Titulaire: VALEO VISION, 93012 Bobigny Cedex (FR)
(72) Inventeur: ALBOU, Pierre, 75013 PARIS (FR); GODBILLON, Vincent, 75011 PARIS (FR)
(74) Mandataire: Valeo Visibility

(56) Documents cités:
- EP-A1- 1 621 400
- EP-A1- 2 752 615
- EP-A2- 1 433 654
- EP-A2- 2 548 768
- WO-A1-2015/022115
- DE-A1- 102010 023 583
- KR-A- 20140 080 156
- US-A1- 2006 023 461
- US-A1- 2009 046 474
- US-A1- 2013 169 154

## Description

L'invention a trait au domaine de l'éclairage et/ou de la signalisation, notamment pour véhicules automobiles. Plus particulièrement, l'invention a trait à un procédé de contrôle d'un faisceau lumineux global émis par un projecteur de véhicule automobile et obtenu par l'addition de faisceaux intermédiaires réalisés par au moins deux moyens d'éclairage, ainsi qu'aux modules lumineux qui peuvent permettre la mise en œuvre de tels procédés de contrôle.

Un véhicule automobile est équipé de projecteurs, ou phares, destinés à illuminer la route devant le véhicule, la nuit ou en cas de luminosité réduite. Ces projecteurs peuvent généralement être utilisés selon deux modes d'éclairage : un premier mode "feux de route" et un deuxième mode "feux de croisement". Le mode "feux de route" permet d'éclairer fortement la route loin devant le véhicule. Le mode "feux de croisement" procure un éclairage plus limité de la route, mais offrant néanmoins une bonne visibilité, sans éblouir les autres usagers de la route. Ces deux modes d'éclairage sont complémentaires. Le conducteur du véhicule doit manuellement changer de mode en fonction des circonstances, au risque d'éblouir par inadvertance un autre usager de la route. En pratique, le fait de changer de mode d'éclairage de façon manuelle peut manquer de fiabilité et s'avérer parfois dangereux. En outre, le mode feux de croisement procure une visibilité parfois insatisfaisante pour le conducteur du véhicule.

Pour améliorer la situation, des projecteurs dotés d'une fonction d'éclairage adaptatif (connue notamment sous l'acronyme anglais AFS pour " Adaptative Frontlighting System ") ont été proposés. Une telle fonction d'éclairage adaptatif est destinée à détecter de façon automatique, par exemple par le traitement d'image acquise par une caméra embarquée, un usager de la route susceptible d'être ébloui par un faisceau d'éclairage émis en mode feux de route par un projecteur, et à modifier le contour de ce faisceau d'éclairage de manière à créer une zone d'ombre à l'endroit où se trouve l'usager détecté. Les avantages d'une telle fonction d'éclairage adaptatif sont multiples : confort d'utilisation, meilleure visibilité par rapport à un éclairage en mode feux de croisement, meilleure fiabilité pour le changement de mode, risque d'éblouissement fortement réduit, conduite plus sûre.

Le document EP2280215 décrit un exemple de système d'éclairage pour projecteur de véhicule automobile, doté d'une fonction d'éclairage adaptatif. Le système comprend quatre éléments optiques primaires, dans chacun desquels trois sources de lumière sont associées à trois guides de lumière respectifs, ainsi que quatre éléments optiques secondaires de projection, en l'espèce des lentilles, respectivement associés aux quatre éléments optiques primaires. La lumière émise par chaque source de lumière pénètre dans le guide de lumière associé et elle sort par une extrémité de sortie du guide, de forme rectangulaire. La disposition des éléments optiques primaires et de leur élément optique secondaire associé fait que la lumière émise par chaque extrémité de sortie de guide optique est projetée par l'élément optique secondaire de manière à former à l'avant du véhicule un segment lumineux vertical. Les segments lumineux produits se superposent partiellement dans la direction horizontale. On joue alors sur l'actionnement des sources de lumières qui peuvent être allumées indépendamment l'une de l'autre, de façon sélective, pour obtenir l'éclairage souhaité et réaliser un faisceau de type route complémentaire, non éblouissant pour les autres usagers de la route. Le faisceau est ainsi divisé en une pluralité de segments lumineux que l'on peut activer ou désactiver. Le faisceau d'éclairage adaptatif que l'on peut ainsi réaliser uniquement par contrôle électronique d'allumage des sources de lumière, et sans mouvement mécanique d'une pièce de cache additionnelle, est notamment connu sous l'appellation de faisceau matriciel. Les documents US2006023461 A1, WO2015022115 A1 et KR20140080156 A divulguent d'autres procédés et systèmes d'éclairage connus.

Par ailleurs, il est de plus en plus fréquent de voir des véhicules automobiles équipés d'une fonction d'éclairage directionnel, plus connu sous l'acronyme anglais DBL (pour Dynamic Bending Light), dans laquelle l'objectif est d'éclairer la route et ses bas-côtés lorsque le véhicule tourne. Le projecteur est monté pivotant autour d'un axe de rotation sensiblement vertical, et dès lors dans un virage, le faisceau projeté en sortie du projecteur n'est plus orienté dans l'axe longitudinal du véhicule mais vers l'intérieur du virage.

L'invention a pour objectif de proposer un procédé de contrôle de faisceaux lumineux qui gère aussi bien la réalisation d'un faisceau matriciel que la réalisation d'un faisceau directionnel et qui puisse gérer le passage de l'un à l'autre.

Dans ce but, l'invention a pour objet un procédé de contrôle selon la revendication 1 d'un faisceau lumineux global émis par un projecteur de véhicule automobile et formé de portions de faisceaux activables sélectivement et réalisées indépendamment les unes des autres par des moyens d'éclairage portés par ledit projecteur, l'ensemble des portions formant un faisceau lumineux global lorsqu'elles sont toutes activées et disposées successivement côte à côte. On prévoit selon le procédé de l'invention de comparer la vitesse instantanée du véhicule à un premier seuil de vitesse prédéterminé, et de déterminer une zone de forte intensité d'éclairage à réaliser lorsque la vitesse instantanée est supérieure au premier seuil de vitesse prédéterminé.

Notamment, on pourra prévoir, dans un mode de mise en œuvre particulier, que le faisceau lumineux global selon l'invention forme un faisceau de type route complémentaire, segmenté par la présence de portions de faisceaux, et destiné à être associé à un faisceau de type code, par exemple en étant juxtaposé ou superposé au faisceau de type code pour former un faisceau route.

On peut comprendre que la disposition successivement côte à côte des portions de faisceaux génère ou non un recouvrement partiel de deux portions successives. On pourra ainsi avoir une disposition dans laquelle les portions de faisceaux sont juxtaposées, bord à bord, de sorte à être jointives deux-à-deux, et on pourra avoir une disposition dans laquelle les portions de faisceaux sont juxtaposées et partiellement superposées de sorte à autoriser un recouvrement partiel d'une portion par une autre portion.

Selon l'invention, on identifie lesquels parmi lesdits moyens d'éclairage réalisent les portions de faisceaux adaptés à assurer l'éclairage de ladite zone de forte intensité d'éclairage, et on pilote un déplacement desdits moyens d'éclairage identifiés dans la précédente étape, et un déplacement des moyens d'éclairage voisins des moyens d'éclairage identifiés dans la précédente étape, de manière à créer un premier faisceau lumineux global spécifique comportant ladite zone de forte intensité d'éclairage. Les moyens d'éclairage sont déplacés de sorte à provoquer une superposition, au moins partielle, des portions de faisceaux réalisées par ces moyens d'éclairage identifié, dans la zone de forte intensité d'éclairage. On comprend que l'on peut identifier par exemple une portion de faisceau cible, réalisée par un moyen d'éclairage cible, comme une zone de forte intensité d'éclairage à réaliser et que l'on peut piloter par suite deux moyens d'éclairage réalisant des portions de faisceau voisines disposées de part et d'autre de la portion de faisceau cible de sorte à provoquer une superposition de ces portions de faisceau voisines et de la portion de faisceau cible.

Selon l'invention:
- on maintient allumé l'ensemble desdits moyens d'éclairage ;
- on s'assure que l'ensemble des portions de faisceaux est déplacé pour maintenir une continuité d'allumage de part et d'autre de la zone de forte intensité d'éclairage ;
- on s'assure que le premier faisceau lumineux global spécifique présente une largeur moindre de celle du faisceau lumineux global.

Selon des caractéristiques d'un mode de mise en œuvre, dans lequel on tient compte de différents paliers de vitesse du véhicule, on compare la vitesse instantanée du véhicule à au moins un deuxième seuil de vitesse prédéterminé, de valeur plus importante que la valeur dudit premier seuil de vitesse, et, lorsque la vitesse instantanée est supérieure audit deuxième seuil de vitesse, on augmente l'intensité lumineuse de ladite zone de forte intensité d'éclairage par superposition d'autres portions de faisceaux et par concentration du faisceau lumineux global ; quel que soit le premier ou le deuxième seuil au-delà duquel la vitesse du véhicule est détectée, on réalise une détection de l'orientation d'avancement du véhicule, et, lorsqu'une situation de roulage en ligne droite est détectée, ladite zone de forte intensité d'éclairage est disposée, par superposition de portions de faisceau, sensiblement au centre du faisceau lumineux global.

Selon l'invention, on réalise la détection, sur une scène de route au voisinage du véhicule, d'une situation spécifique dans laquelle un véhicule tiers est susceptible d'être ébloui par ledit faisceau lumineux global. Dans ce cas, on détermine une première zone cible dans ledit faisceau global incluant ledit véhicule tiers, et on identifie alors des moyens d'éclairage portés par ledit projecteur qui réalisent les portions de faisceaux assurant l'éclairage de ladite première zone cible. On pilote ensuite un déplacement desdits moyens d'éclairage identifiés dans la précédente étape, de manière à créer une zone de moindre éclairage correspondant à ladite première zone cible, ladite zone de forte intensité d'éclairage étant alors scindée en deux sous-zones disposées de part et d'autre de ladite zone de moindre éclairage.

Selon d'autres caractéristiques de l'invention, on peut réaliser la détection, sur une scène de route au voisinage du véhicule, d'une situation spécifique dans laquelle le véhicule est confronté à un virage. Dans ce cas, on détermine une deuxième zone cible dans ledit faisceau global en fonction des caractéristiques du virage, et on identifie alors des moyens d'éclairage portés par ledit projecteur qui réalisent les portions de faisceaux assurant l'éclairage de ladite deuxième zone cible. On pilote ensuite un déplacement desdits moyens d'éclairage identifiés dans la précédente étape, de manière à créer une deuxième zone de forte intensité d'éclairage correspondant à ladite deuxième zone cible.

Dans ces deux derniers cas, les moyens d'éclairage sont pilotés, lorsque l'on réalise la détection que ladite situation spécifique est terminée, pour prendre respectivement une position apte à créer ledit premier faisceau lumineux global spécifique.

Selon une autre série de caractéristiques de l'invention, prises seules ou en combinaison avec ce qui a précédé :
- lesdits moyens d'éclairage comportent des sources de lumière et des moyens de déviation optiques associés respectivement à au moins l'une des sources de lumière, chaque source de lumière étant commandée individuellement en allumage tandis que lesdits moyens de déviation optique sont commandés individuellement en déplacement ;
- le faisceau lumineux global consiste en un faisceau de type route complémentaire, non segmenté, de type faisceau matriciel ; le faisceau lumineux global est obtenu par l'addition de faisceaux intermédiaires réalisés respectivement par des ensembles distincts de moyens d'éclairage, et dans lequel on pilote en déplacement les moyens d'éclairage de chaque ensemble pour créer la zone de forte intensité d'éclairage ;
- les portions de faisceaux consistent en des segments verticaux juxtaposés les uns aux autres, le déplacement des moyens d'éclairage générant le déplacement d'au moins un desdits segments et sa superposition sur d'autres segments du faisceau lumineux global.

L'invention concerne également un système d'éclairage automobile selon la revendication 7 comportant un projecteur gauche et un projecteur droit, chacun comportant au moins un module lumineux pour la mise en œuvre du procédé de contrôle tel qu'il vient d'être présenté, et qui comporte notamment au moins une source de lumière et des moyens de déviation optique montés mobiles.

Selon différentes caractéristiques propres à un tel module lumineux :
- on prévoit un système optique pour l'émission d'un faisceau lumineux, les moyens de déviation optique étant intercalés entre la source de lumière et le système optique ;
- le système optique consiste en un réflecteur et une lentille de projection ;
- la source de lumière comporte une pluralité de sources à semi-conducteurs ;
- les moyens de déviation optique consistent en des microsystèmes électromécaniques optiques, montés mobiles en rotation entre deux positions d'extrémité, lesdits microsystèmes électromécaniques optiques étant aptes à prendre au moins une position intermédiaire prédéterminée entre les deux positions d'extrémité ;
- les microsystèmes électromécaniques optiques sont montés mobiles en rotation pour passer de l'une à l'autre des positions d'extrémité, avec un angle de rotation compris entre 2° et 7° ;
- chaque microsystème électromécanique optique consiste en un miroir apte à dévier les rayons lumineux émis par la source de lumière et monté sur un axe de rotation porté par le module ;
- les microsystèmes électromécaniques sont agencés en une matrice linéaire ;
- on prévoit un dispositif optique primaire, notamment une lentille de collimation ou de focalisation, disposé entre les sources de lumière et les moyens de déviation optique.

L'invention peut concerner également un système d'éclairage automobile comportant au moins un module lumineux tel que présenté précédemment, ainsi qu'au moins des moyens de détection de la vitesse instantanée du véhicule, des moyens d'analyse des informations de détection reçues et des moyens de calcul, comportant au moins des moyens de comparaison de la vitesse instantanée par rapport à au moins un seuil prédéterminée, pour donner instruction de commande de déplacement des moyens de déviation optique, sur la base d'au moins une information de vitesse du véhicule.

Dans un tel système d'éclairage au moins un module lumineux tel que présenté précédemment est disposé dans un projecteur gauche du véhicule automobile et qu'au moins un module lumineux tel que présenté précédemment est disposé dans un projecteur droit du véhicule, lesdits modules étant agencés de sorte que les faisceaux lumineux intermédiaires qu'ils génèrent s'additionnent pour former un faisceau lumineux global.

Le système d'éclairage peut comporter en outre des moyens de détection d'un véhicule tiers sur une scène de route, et/ou des moyens de détection d'un virage s'étendant en avant du véhicule.

D'autres caractéristiques et avantages de la présente invention apparaitront plus clairement à l'aide de la description et des dessins parmi lesquels :
- la figure 1 est une représentation schématique, vue de côté, d'un module lumineux selon l'invention, dans lequel sont ici rendus visibles une source de lumière, une lentille de collimation, des moyens de déviation optique, un réflecteur et une lentille de projection ;
- la figure 2 est une représentation schématique du module de la figure 1, vue de dessus, dans laquelle le réflecteur est rendu transparent pour faciliter la visibilité des moyens de déviation optique, et les axes de rotation des microsystèmes électromécaniques qui les composent ; et

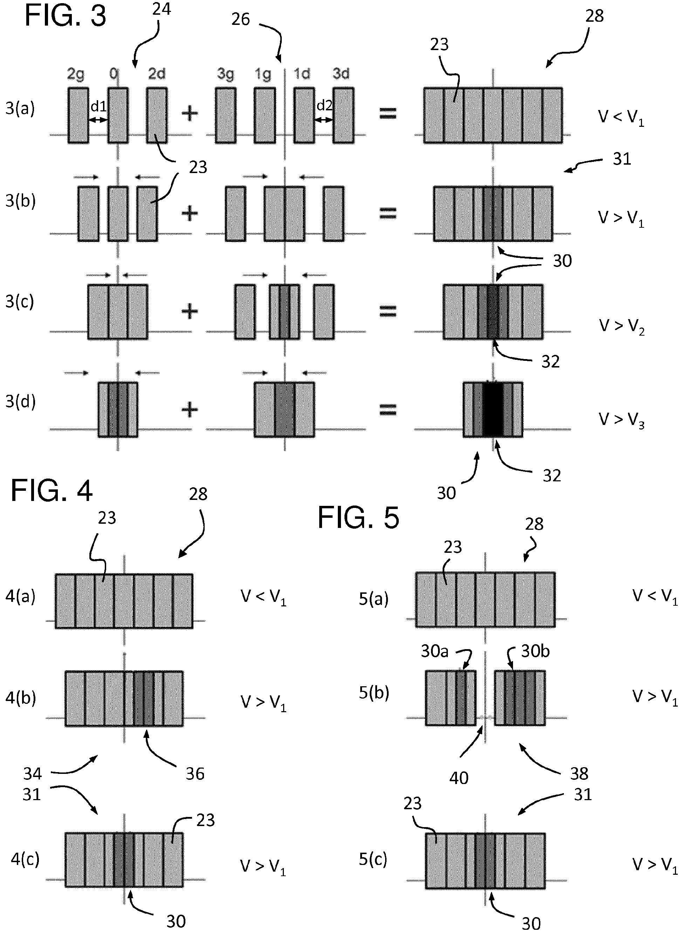

- les figures 3 à 5 sont des schémas illustrant le fonctionnement de l'invention dans lequel on fait pivoter des faisceaux intermédiaires pour modifier le faisceau lumineux global émis par un projecteur de véhicule automobile, selon un mode de mise en œuvre dans lequel le faisceau lumineux global est modifié uniquement en fonction de la vitesse du véhicule (figure 3), selon un mode de mise en œuvre dans lequel le faisceau lumineux global est modifié en outre en fonction de la détection d'une situation de virage (figure 4), et selon un mode de mise en œuvre dans lequel le faisceau lumineux global est modifié en outre en fonction de la détection d'un véhicule pouvant être ébloui (figure 5).

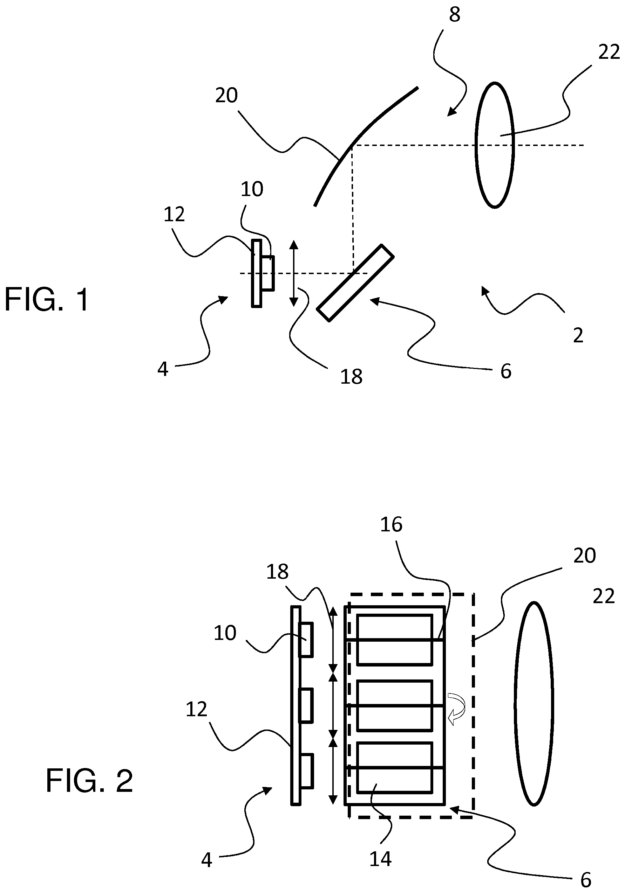

On va tout d'abord décrire un module lumineux pour l'éclairage et/ou la signalisation d'un véhicule automobile selon un premier mode de réalisation illustré sur les figures 1 et 2. Le module lumineux 2 comporte au moins une source de lumière 4 apte à émettre des rayons lumineux en direction de premiers moyens de déviation optique 6, et un système optique 8. En sortie du module, on réalise ainsi un faisceau intermédiaire, apte à être complété par addition d'autres faisceaux intermédiaires obtenus par d'autres modules lumineux disposés à proximité dans un même projecteur du véhicule automobile ou dans un autre projecteur, de manière à former un faisceau lumineux global. Dans la description qui va suivre, on utilisera le terme de plan optique pour définir le plan vertical comportant l'axe optique, étant observé que le plan optique correspond au plan de la feuille dans l'illustration de la figure 1.

Tel que cela va être décrit à la suite, au moins les premiers moyens de déviation optique sont commandés pour que, lorsque la vitesse instantanée du véhicule est supérieure à un premier seuil de vitesse prédéterminé, on concentre une partie du faisceau lumineux global pour former une zone de forte intensité d'éclairage, c'est-à-dire une zone éclairée plus fortement que les zones immédiatement voisines.

Chaque source de lumière consiste ici en une source à semi-conducteurs, et par exemple une diode électroluminescente, qui peut être associée à une carte de circuits imprimés et à un radiateur pour le refroidissement des composants électroniques portés par ladite carte.

Tel que cela est visible sur la figure 2, le module comporte trois diodes électroluminescentes 10 distinctes rapportées sur une carte commune 12 de circuits imprimés. Il sera compris que d'autres configurations, en nombre, en agencement géométrique, pourront être choisies sans sortir du contexte de l'invention. Notamment dans la description à venir de modes de mise en œuvre préférés de l'invention, il sera précisé qu'un système d'éclairage de véhicule peut comporter un premier module dans lequel trois diodes sont aptes à réaliser trois portions de faisceaux et un deuxième module dans lequel quatre diodes sont aptes à réaliser quatre portions de faisceaux, ces sept portions venant se juxtaposer et/ou superposer pour former un faisceau lumineux global.

Les premiers moyens de déviation optique 6 consistent en une pluralité de microsystèmes électromécaniques (connus sous l'acronyme MEMS pour la traduction anglaise " MicroElectroMechanical Systems "), agencés en matrice ligne de telle sorte que chacun de ces microsystèmes électromécaniques soit disposé en regard d'une diode électroluminescente (ou d'un " chip lumineux " individuellement adressable de la diode). Les microsystèmes électromécaniques s'étendent longitudinalement en avant des sources de lumière, et ils consistent en des miroirs 14 mobiles aptes à réfléchir une partie des rayons lumineux émis par la source de lumière.

Chaque miroir 14 est monté mobile en rotation autour d'un axe 16 porté par le module, de manière à pivoter entre deux positions d'extrémité, obtenues par butée mécanique de la rotation de l'axe. Selon la position des miroirs dans la série, et donc selon la position centrée ou excentrée de la portion de faisceau lumineux générée par ce miroir, une position standard de chaque miroir est définie comme étant l'une des deux positions d'extrémité, ou bien comme la position au centre des deux positions d'extrémités. Pour une diode centrée sur l'axe optique et le microsystème électromécanique associé également centré sur l'axe optique, on calibre la première position standard pour que les rayons réfléchis par le miroir ainsi orienté impactent le système optique disposé en aval sensiblement dans le plan optique, et on calibre les deux positions d'extrémité, soit de part et d'autre de la première position standard pour que les rayons réfléchis par le miroir ainsi orienté impactent le système optique à une distance du plan optique correspondant à la moitié de la largeur souhaitée des segments lumineux composant le faisceau lumineux intermédiaire, ou bien avec l'une des positions d'extrémité correspondant à la position standard, et l'autre position d'extrémité calibrée pour que les rayons réfléchis par le miroir ainsi orienté impactent le système optique à une distance du plan optique correspondant à la largeur souhaitée des segments lumineux composant le faisceau lumineux intermédiaire, dans le sens du rapprochement du centre du faisceau lumineux global.

On comprend que lorsque tous les miroirs sont dans la position standard, on obtient des faisceaux intermédiaires réguliers, avec des segments le composant disposés à intervalles réguliers. Par contre, si l'un seulement des miroirs des moyens de déviation optique est pivoté, le faisceau intermédiaire n'est plus régulier, et la superposition des deux faisceaux intermédiaires implique une superposition de deux segments du faisceau matriciel, et donc une zone de plus forte intensité lumineuse.

Dans la plage angulaire de rotation choisie avantageusement étroite, de l'ordre de 2° à 7°, la lumière réfléchie par les miroirs dans l'une ou l'autre des positions extrêmes est dirigée intégralement vers le dispositif de projection disposé en aval sur le trajet des rayons lumineux. Dans leur première position d'extrémité, les moyens de déviation optiques sont aptes à dévier les rayons lumineux vers une première zone du système optique et dans leur deuxième position d'extrémité, les mêmes moyens de déviation sont aptes à dévier les rayons lumineux vers une deuxième zone du système optique.

Il est en outre particulièrement intéressant de noter que les microsystèmes utilisés dans l'invention ne sont pas binaires. On entend par là que l'angle de rotation peut être choisie indifféremment dans la plage angulaire de +/- 7°, sans être limité à l'une ou l'autre des positions extrêmes, par des instructions de commande de tension ou de courant selon le type de microsystèmes choisis, à commande électrostatique, piézoélectrique ou magnétique par exemple.

Notamment, on peut prévoir pour chaque microsystème des positions intermédiaires prédéfinies, qui pourront être prises par ces microsystèmes pour former une portion de faisceaux associée à un état prédéfini tel que cela sera décrit ci-après.

Eventuellement une optique primaire est disposée entre les premiers moyens de déviation optique et la source de lumière, en complément du système optique disposé en sortie du module, pour améliorer l'efficacité et éviter les recouvrements de faisceaux. Cette optique primaire peut être une lentille de collimation ou de focalisation 18.

Le système optique 8 est disposé en sortie du module sur le trajet des rayons lumineux émis par la diode électroluminescente 10 et déviés par les miroirs 14. Tel qu'illustré, le système optique comporte un réflecteur 20 et une lentille de projection 22. On comprendra que d'autres agencements de système optique peuvent être mis en place sans sortir du contexte de l'invention.

Le module comporte en outre des moyens de commande des sources de lumière et des microsystèmes électromécaniques, aptes à piloter d'une part l'allumage, l'extinction ou la modification de l'intensité lumineuse émise par chaque source de lumière de chaque module, et d'autre part la rotation des microsystèmes électromécaniques en fonction d'informations de condition de circulation du véhicule, parmi lesquelles les moyens de commande reçoit au moins une information de détection de la vitesse d'avancement du véhicule. Cette information peut être obtenue par un capteur spécifique au procédé de contrôle selon l'invention, ou bien être prélevée sur un réseau d'informations du véhicule. Les moyens de commande comportent des moyens d'analyse de toute information transmise par ces moyens de détection.

D'autres informations de condition de circulation peuvent être obtenues et fournies aux moyens de commande, et notamment, on peut prévoir des moyens de détection sur la scène de route éclairée d'un véhicule à ne pas éblouir, et/ou des moyens de détection de la présence d'un virage devant le véhicule. Les moyens de détection peuvent consister par exemple en une caméra tournée vers la scène de route s'étendant devant le véhicule, et en des moyens de traitement d'image associés, qui permettent l'élaboration d'une information de détection que le module de détection est apte à envoyer aux moyens de commande pour la rotation des microsystèmes électromécaniques. Les moyens de détection de la présence d'un virage devant le véhicule peuvent consister en un capteur de vitesse angulaire du véhicule, ou bien en un système embarqué de navigation par satellite.

Un module lumineux 2 tel qu'il vient d'être décrit permet la mise en œuvre du procédé de contrôle d'un faisceau lumineux global émis par un projecteur de véhicule automobile et obtenu par l'addition de faisceaux intermédiaires réalisés par au moins deux moyens d'éclairage selon l'invention.

Dans un premier temps, des rayons lumineux sont émis par les diodes 10 du module 2 lorsque le module de commande reçoit une information relative à la détection automatique des conditions de roulage en feux route ou une information relative à une commande du conducteur.

Les rayons sont dirigés sensiblement parallèlement à l'axe optique vers les microsystèmes électromécaniques formés de miroirs mobiles 14 qui se trouvent dans la première position standard, et il en résulte un faisceau intermédiaire de type " feux de route ", divisé en un nombre de segments égal au nombre de diodes, et de miroirs correspondants, prévues pour l'ensemble du système d'éclairage.

En fonction des informations envoyées par les moyens de détection au module de commande, qu'elles soient relatives à la vitesse du véhicule d'une part, et à la présence d'un véhicule sur la scène de route éclairée par le faisceau préalablement réalisé ou à la présence d'un virage devant le véhicule d'autre part, le module de commande identifie quelle est la zone de forte intensité d'éclairage à réaliser, et éventuellement la zone dans laquelle un véhicule détecté est présent, et il détermine quelles sont les diodes et les microsystèmes électromécaniques associés à déplacer pour réaliser l'éclairage adapté de ces zones.

Les rayons lumineux déviés par un miroir représentent un segment lumineux, ici vertical, du faisceau intermédiaire et la rotation de quelques degrés d'un miroir génère un déplacement transversal du segment lumineux correspondant. Tel que cela a pu être précisé précédemment, on peut prévoir au moins une position intermédiaire que le miroir peut prendre pour générer une position intermédiaire de la portion de faisceau correspondante, entre la position standard dans laquelle il forme le faisceau lumineux global et une position d'extrémité.

On va maintenant décrire, en se référant aux figures 3 à 5, différents modes de mise en œuvre du procédé de contrôle. Dans chacun de ces modes de mise en œuvre, le faisceau lumineux global est obtenu par l'addition de deux faisceaux lumineux intermédiaires complémentaires, dans le cas d'un ensemble d'éclairage de véhicule automobile dans lequel deux modules lumineux tels qu'ils viennent d'être décrits sont logés en série dans un projecteur dont le faisceau lumineux global est représenté à droite des figures, résultant de l'addition des faisceaux intermédiaires des deux modules représentés à gauche des figures.

Chacune de ces figures illustre une séquence d'éclairage pour laquelle on a représenté successivement, de haut en bas, avec des portions 23 de faisceau lumineux projeté sur un mur vertical, les différents états du faisceau lumineux global selon les informations reçues par le moyen de commande associé à chaque module, la figure 3 illustrant de façon plus détaillée les différents états des portions de faisceau intermédiaire et la combinaison qui en résulte pour former le faisceau lumineux global, tandis que les figures 4 et 5 ne montrent que le faisceau lumineux global.

Chacune de ces figures illustre un mode de mise en œuvre prenant en considération l'information de vitesse tel que la présente invention le prévoit.

Sur la figure 3, on a illustré le cas où seule l'information de vitesse est prise en considération. La première ligne correspond à un état standard avec une vitesse d'avancement du véhicule inférieure à un premier seuil de vitesse prédéterminé. Un premier module comporte trois diodes, et lorsque celles-ci sont allumées, il se forme, par réflexion de la lumière émise sur les moyens de déviation optique notamment, un premier faisceau intermédiaire 24 composé de trois segments 2g, 0, 2d, espacés l'un de l'autre, selon la direction transversale, d'un premier intervalle déterminé d1. Un deuxième module comporte lui quatre diodes, et lorsque celles-ci sont allumées, il se forme un deuxième faisceau intermédiaire 26 composé de quatre segments 3g, 1g, 1d, 3d, espacés l'un de l'autre, selon la direction transversale, d'un deuxième intervalle déterminé d2. Les modules sont orientés par rapport à l'axe optique du véhicule, de manière à ce que, par addition des deux faisceaux intermédiaires, il se forme un faisceau lumineux global 28 composé d'une succession de portions de faisceau 23, ici sous forme de segments, étant entendu que les segments du premier faisceau intermédiaire ont une largeur égale au deuxième intervalle d2 pour venir se loger entre les segments du deuxième faisceau intermédiaire et qu'inversement les segments du deuxième faisceau intermédiaire ont une largeur égale au premier intervalle d1 pour venir se loger entre les segments du premier faisceau intermédiaire. Tel qu'illustré, on peut prévoir que les segments aient tous la même dimension et que les intervalles entre les segments soient les mêmes d'un faisceau intermédiaire à l'autre. Il convient de noter que selon l'invention, la largeur des segments peut varier d'un segment à l'autre selon qu'ils soient positionnés au centre du faisceau ou sur les bords. Les segments centraux sont ainsi prévus plus étroits que les segments latéraux. Dans le même ordre d'idée d'un agencement non homogène selon la position des segments, les intervalles entre les segments d'un sous-faisceau peuvent varier, et les angles de rotation des segments peuvent différer d'un segment à l'autre.

On comprend que l'on peut prévoir que les segments du bord du faisceau soient fixes et qu'ils soient pilotés simplement en extinction ou en allumage. On évite ainsi de devoir gérer un angle de rotation de valeur élevée pour leur déplacement, compliqué à mettre en œuvre, alors que ce déplacement peut ne pas se justifier compte tenu de la position du segment sur la route. Le système peut donc combiner des segments qui se déplacent et des segments fixes. Toutefois, on a représenté des modes de mise en œuvre dans lequel avantageusement l'ensemble des segments se déplace pour réaliser un faisceau sans discontinuité et à forte intensité lumineuse global, sans extinction de l'une ou l'autre des sources.

Les lignes 3(b) à 3(d) de la figure 3 illustrent la réalisation d'une zone de forte intensité d'éclairage 30 au centre du faisceau lumineux global, dans le cas où la vitesse d'avancement du véhicule V est successivement supérieure à un premier seuil déterminé V₁, un deuxième seuil de vitesse déterminé V₂ et un troisième seuil de vitesse déterminé V₃, avec V₁ < V₂ < V₃. Le fait que le véhicule roule à vitesse rapide implique que le conducteur doit pouvoir anticiper sur d'éventuelles modifications des conditions de circulation, et par exemple des obstacles pouvant se dresser sur sa route. Il est dès lors intéressant d'augmenter l'intensité lumineuse au centre du faisceau lumineux global, par déplacement de portions de faisceau et pilotage des moyens d'éclairage correspondant, afin que le conducteur ait une meilleure vision de ce qui arrive devant son véhicule, celui-ci roulant en ligne droite. La zone de forte intensité d'éclairage est d'autant plus concentrée que la vitesse est rapide.

Sur la ligne 3(b), on forme un premier faisceau lumineux global spécifique 31 dans lequel la zone de forte intensité d'éclairage 30 est obtenue par superposition des portions de faisceau 1g et 1d chacun respectivement d'une moitié de la portion de faisceau 0. L'ensemble des microsystèmes, à l'exception de celui correspondant à la portion de faisceau centrale 0, est pivoté de sorte que les portions de faisceau distinctes de celle du centre se rapprochent du centre d'une distance équivalente à une demi-largeur de portion de faisceau.

On peut observer que le premier faisceau lumineux global spécifique 31 est moins large que le faisceau lumineux global 28. Et de façon plus générale, il est notable que, plus la vitesse est rapide, moins le faisceau lumineux global est large. Ceci s'explique par le fait que les portions de faisceau extérieurs 3g et 3d suivent le resserrement des portions de faisceau sur le centre du faisceau global, afin de garder un faisceau global continu, et ceci se justifie par le fait qu'à grande vitesse, il est moins pénalisant de ne pas voir des obstacles présent sur les côtés à hauteur du véhicule puisque la vitesse permet de les dépasser sur la lancée du véhicule.

Sur la ligne 3(c), on augmente encore l'intensité d'éclairage de la zone 30 par superposition des portions de faisceau. Une bande 32 de très forte intensité est réalisée par la superposition des portions de faisceau 1g, 1d et 0. Au moins trois portions de faisceau sont superposées pour former cette bande 32. Là encore, les portions de faisceau sont rapprochées du centre pour conserver un faisceau lumineux global sans discontinuité. On constate que de ce fait, la largeur de la zone de forte intensité d'éclairage, c'est-à-dire dont l'intensité d'éclairage est supérieure à celle de chacune des portions du faisceau lumineux global illustré sur la ligne 3a, est plus grande à ce stade, avec V supérieure à V₂, que la largeur de la zone de forte intensité lorsque V est inférieure à V₂.

Enfin, sur la ligne 3(d), on augmente l'intensité d'éclairage de la zone 30 à son maximum, en créant là encore une bande 32 de très forte intensité obtenue cette fois par superposition d'au moins quatre portions de faisceau lumineux. Les remarques faites au paragraphe précédent s'applique également lorsque V est supérieur à V₃. On comprend que l'on a représenté ici quatre étapes distinctes, avec trois seuils de vitesse déterminés auxquels est comparée la vitesse V du véhicule, mais que ce nombre pourrait varier notamment en fonction du nombre de portions de segments.

La figure 4 illustre un état dans lequel un virage a été détecté et dans lequel on cherche à créer un deuxième faisceau lumineux global spécifique 34 comportant une deuxième zone de forte intensité d'éclairage 36 différente de la première zone de forte intensité d'éclairage 30. Cette deuxième zone est de forte intensité d'éclairage, puisque la vitesse du véhicule V est supérieure au premier seuil V₁, et elle est orientée vers l'intérieur du virage afin d'optimiser la visibilité du conducteur de la scène de route devant le véhicule. A cet effet, le premier faisceau intermédiaire 24 et le deuxième faisceau intermédiaire connaissent des déplacements, par pilotage des moyens d'éclairage, différents du cas précédent en ce que la portion de faisceau central 0 est décalé vers l'intérieur du virage et en ce que celle des portions de faisceau qui est immédiatement voisine de cette portion de faisceau central dans le faisceau lumineux global et qui est vers l'intérieur du visage, c'est-à-dire ici la portion 1d, reste inchangée. La zone cible dans laquelle on veut faire porter cette deuxième zone de forte intensité d'éclairage est déterminée par les moyens de commande du véhicule en fonction des caractéristiques du virage.

Lorsque la situation de virage est terminée, il est dès lors rapide de revenir à une situation d'éclairage en ligne droite à grande vitesse, avec une zone de forte intensité d'éclairage 30 au centre d'un faisceau similaire au premier faisceau lumineux global spécifique 31 (cf. ligne 4(c)). On comprend que selon l'invention, on passe d'une situation à l'autre, avec une zone de forte intensité d'éclairage située au centre du faisceau global en ligne droite ou vers l'intérieur du virage, avec des sources de lumière fixe dans un module fixe, uniquement par inclinaison d'un miroir pivotant.

La figure 5 illustre un état dans lequel un véhicule a été détecté et dans lequel on cherche à créer un troisième faisceau lumineux global spécifique 38 dans lequel est formée une zone cible, de moindre éclairage, 40 dans laquelle aucun rayon lumineux potentiellement éblouissant n'est formé. A cet effet, le premier faisceau intermédiaire 24 et le deuxième faisceau intermédiaire 26 sont modifiés par décalage transversal d'au moins un segment lumineux, de manière à créer des zones de forte intensité 30a et 30b de part et d'autre de la zone cible 40. Comme précédemment, puisque la vitesse du véhicule est supérieure à un premier seuil déterminé V₁, on rétrécit la largeur du faisceau en rapprochant du centre les portions de faisceau extérieures. Le fait, par pilotage des moyens d'éclairage, d'écarter de la zone cible, où l'on souhaite un moindre éclairage, les portions de faisceau correspondant à cette zone cible, combiné à ce rapprochement du centre des portions de faisceau extérieur, génère une superposition de portions de faisceau de part et d'autre de la zone moindre éclairage et donc la scission de la zone de forte intensité d'éclairage 30 en deux parties, non forcément symétriques, de part et d'autre de la zone de moindre éclairage 40.

Comme précédemment, lorsque la situation de croisement est terminée, il est dès lors rapide de revenir à une situation d'éclairage en ligne droite à grande vitesse, avec une zone de forte intensité d'éclairage 30 au centre d'un faisceau similaire au premier faisceau lumineux global spécifique (cf. ligne 5(c)). On comprend que selon l'invention, on passe d'une situation à l'autre, avec une zone de forte intensité d'éclairage située au centre du faisceau global en ligne droite ou vers l'intérieur du virage, avec des sources de lumière fixe dans un module fixe, uniquement par inclinaison d'un miroir pivotant.

Selon une variante de l'invention, on pourra prévoir, notamment dans le cas d'un « pixel lighting », que le déplacement des portions de faisceau en fonction de la vitesse puisse être horizontal ou vertical. Tel que cela a pu être décrit précédemment, le déplacement horizontal d'une partie de faisceau est fait sur chaque segment individuellement, et il est intéressant de noter que le déplacement vertical est lui effectué sur le module dans son ensemble. On peut utiliser pour cela des microsystèmes électromécaniques contrôlables sur deux axes perpendiculaires. Avec de tels dispositifs, la lumière de la zone à éteindre peut être « éjectée » aussi bien latéralement, ce qui est préférable pour les zones au voisinage de l'horizon, que verticalement, vers le haut ou le bas, ce qui peut être plus intéressant pour des zones situées en hauteur.

La description qui précède explique clairement comment l'invention permet d'atteindre les objectifs qu'elle s'est fixés et notamment de proposer un procédé de contrôle de faisceaux lumineux intermédiaire qui permette la réalisation d'un faisceau de type route complémentaire segmenté, qui peut être modifié pour que, en fonction de la vitesse instantanée du véhicule par rapport à au moins un seuil de vitesse prédéterminé, l'on concentre une partie du faisceau lumineux global pour former une zone de forte intensité d'éclairage, c'est-à-dire une zone éclairée plus fortement que les zones immédiatement voisines, et ce sans déperdition d'intensité lumineuse au global, et sans augmentation d'intensité de l'une ou l'autre des sources de lumière.

## Revendications

1. Procédé de contrôle d'un faisceau lumineux global (28) émis par un projecteur de véhicule automobile et formé de portions de faisceaux (23) activables sélectivement et réalisées indépendamment les unes des autres par des moyens d'éclairage (4, 6) portés par ledit projecteur, l'ensemble des portions formant un faisceau lumineux global lorsqu'elles sont toutes activées et disposées successivement côte à côte, dans lequel on compare la vitesse instantanée du véhicule à un premier seuil de vitesse prédéterminé (V₁), dans lequel on détermine une zone de forte intensité d'éclairage (30) à réaliser lorsque la vitesse instantanée est supérieure au premier seuil de vitesse prédéterminé, dans lequel par des moyens de détection on identifie lesquels parmi lesdits moyens d'éclairage (4, 6) réalisent les portions de faisceaux (23) adaptés à assurer l'éclairage de ladite zone de forte intensité d'éclairage (30), et dans lequel on pilote un déplacement desdits moyens d'éclairage identifiés dans la précédente étape, et des moyens d'éclairage directement voisins desdits moyens d'éclairage identifiés dans la précédente étape, de manière à créer un premier faisceau lumineux global spécifique (31) comportant ladite zone de forte intensité d'éclairage (30), lesdits moyens d'éclairage étant déplacés de sorte à provoquer une superposition, au moins partielle, des portions de faisceaux réalisées par ces moyens d'éclairage identifiés, dans la zone de forte intensité d'éclairage, dans lequel on maintient allumé l'ensemble desdits moyens d'éclairage (4, 6) et , dans lequel l'ensemble des portions de faisceaux (23) est déplacé pour maintenir une continuité d'allumage de part et d'autre de la zone de forte intensité d'éclairage (30), dans lequel on réalise une détection de l'orientation d'avancement du véhicule, et dans lequel, lorsqu'une situation de roulage en ligne droite est détectée, ladite zone de forte intensité d'éclairage (30) est disposée, par superposition de portions de faisceau, sensiblement au centre du premier faisceau lumineux global spécifique (31), dans lequel on réalise la détection, sur une scène de route au voisinage du véhicule, d'une situation spécifique dans laquelle un véhicule tiers est susceptible d'être ébloui par ledit faisceau lumineux global (28), et on détermine une zone cible dans ledit faisceau global incluant ledit véhicule tiers, **caractérisé en ce qu'** on identifie alors des moyens d'éclairage (4, 6) portés par ledit projecteur qui réalisent les portions de faisceaux assurant l'éclairage de ladite zone cible, et dans lequel on pilote un déplacement desdits moyens d'éclairage identifiés dans la précédente étape, de manière à créer une zone de moindre éclairage (40) correspondant à ladite zone cible, ladite zone de forte intensité d'éclairage (30) étant alors scindée en deux sous-zones (30a, 30b) disposées de part et d'autre de ladite zone de moindre éclairage (40).

2. Procédé de contrôle selon l'une des revendications précédentes, dans lequel on compare la vitesse instantanée du véhicule à au moins un deuxième seuil de vitesse (V₂) prédéterminé, de valeur plus importante que la valeur dudit premier seuil de vitesse (V₁), et dans lequel, lorsque la vitesse instantanée est supérieure audit deuxième seuil de vitesse (V₂), on augmente l'intensité lumineuse de ladite zone de forte intensité d'éclairage (30) par superposition d'autres portions de faisceaux et par concentration du faisceau lumineux global.

3. Procédé de contrôle selon l'une des revendications 1 ou 2, dans lequel on réalise la détection, sur une scène de route au voisinage du véhicule, d'une situation spécifique dans laquelle le véhicule est confronté à un virage, et on détermine une deuxième zone cible dans ledit faisceau global en fonction des caractéristiques du virage, dans lequel on identifie alors des moyens d'éclairage (4, 6) portés par ledit projecteur qui réalisent les portions de faisceaux assurant l'éclairage de ladite deuxième zone cible, et dans lequel on pilote un déplacement desdits moyens d'éclairage identifiés dans la précédente étape, de manière à créer une deuxième zone de forte intensité d'éclairage (36) correspondant à ladite deuxième zone cible.

4. Procédé de contrôle selon l'une des revendications précédentes, **caractérisé en ce que** les moyens d'éclairage (4, 6) sont pilotés, lorsque l'on réalise la détection que ladite situation spécifique est terminée, pour prendre respectivement une position apte à créer ledit premier faisceau lumineux global spécifique (31).

5. Procédé de contrôle selon l'une des revendications précédentes, **caractérisé en ce que** lesdits moyens d'éclairage comportent des sources de lumière (4) et des moyens de déviation optiques (6) associés respectivement à au moins l'une des sources de lumière, chaque source de lumière étant commandée individuellement en allumage tandis que lesdits moyens de déviation optique sont commandés individuellement en déplacement.

6. Procédé selon l'une des revendications précédentes, dans lequel les portions de faisceaux (23) consistent en des segments verticaux juxtaposés les uns aux autres, le déplacement des moyens d'éclairage (4, 6) générant le déplacement d'au moins un desdits segments et sa superposition sur d'autres segments du faisceau lumineux global.

7. Système d'éclairage automobile comportant un projecteur gauche et un projecteur droit, chacun comportant au moins un module lumineux pour la mise en œuvre du procédé de contrôle selon l'une des revendications précédentes, lequel au moins un module lumineux comporte une source de lumière (4) et des moyens de déviation optique (6) montés mobiles.

8. Système d'éclairage automobile selon la revendication 7, **caractérisé en ce qu'**il comporte en outre un système optique (8) pour l'émission d'un faisceau lumineux, les moyens de déviation optique (6) étant intercalés entre la source de lumière et le système optique.

9. Système d'éclairage automobile selon l'une des revendications 7 à 8, **caractérisé en ce que** les moyens de déviation optique (6) consistent en des microsystèmes électromécaniques optiques (14, 16), montés mobiles en rotation entre deux positions d'extrémité.

10. Système d'éclairage automobile selon l'une des revendications 7 à 9 comportant en outre au moins des moyens de détection de la vitesse instantanée du véhicule, des moyens d'analyse des informations de détection reçues et des moyens de calcul, comportant au moins des moyens de comparaison de la vitesse instantanée par rapport à au moins un seuil prédéterminé, pour donner instruction de commande de déplacement des moyens de déviation optiques (6).

## Patentansprüche

1. Verfahren zum Steuern eines globalen Lichtbündels (28), das von einem Kraftfahrzeugscheinwerfer emittiert wird und aus Bündelteilen (23) ausgebildet ist, die selektiv aktivierbar sind und unabhängig voneinander durch vom Scheinwerfer getragene Beleuchtungsmittel (4, 6) realisiert werden, wobei die Gesamtheit der Teile ein globales Lichtbündel ausbildet, wenn sie alle aktiviert und aufeinanderfolgend nebeneinander angeordnet sind, wobei die momentane Geschwindigkeit des Fahrzeugs mit einem vorbestimmten ersten Geschwindigkeitsschwellenwert (V1) verglichen wird, wobei ein Bereich (30) hoher Beleuchtungsintensität bestimmt wird, die realisiert werden soll, wenn die momentane Geschwindigkeit über dem vorbestimmten ersten Geschwindigkeitsschwellenwert liegt, wobei durch Erfassungsmittel identifiziert wird, welche der Beleuchtungsmittel (4, 6) die Bündelteile (23) realisieren, die dazu geeignet sind, die Beleuchtung des Bereichs (30) hoher Beleuchtungsintensität zu gewährleisten, und wobei eine Bewegung der im vorherigen Schritt identifizierten Beleuchtungsmittel und der Beleuchtungsmittel, die zu den im vorherigen Schritt identifizierten Beleuchtungsmitteln direkt benachbart sind, gesteuert wird, um ein erstes spezifisches globales Lichtbündel (31) zu erzeugen, das den Bereich hoher Beleuchtungsintensität (30) umfasst, wobei die Beleuchtungsmittel so bewegt werden, dass im Bereich hoher Beleuchtungsintensität eine zumindest teilweise Überlagerung der durch diese identifizierten Beleuchtungsmittel realisierten Bündelteile bewirkt wird, wobei die Gesamtheit der Beleuchtungsmittel (4, 6) eingeschaltet bleibt und wobei die Gesamtheit der Bündelteile (23) bewegt wird, um eine Beleuchtungskontinuität auf beiden Seiten des Bereichs (30) hoher Beleuchtungsintensität aufrechtzuerhalten, wobei eine Erfassung der Bewegungsrichtung des Fahrzeugs durchgeführt wird und wobei, wenn eine Situation des Geradeausfahrens erfasst wird, der Bereich (30) hoher Beleuchtungsintensität durch Überlagerung von Strahlenteilen im Wesentlichen in der Mitte des ersten spezifischen globalen Lichtbündels (31) angeordnet wird, wobei in einem Fahrbahnausschnitt in der Fahrzeugumgebung die Erfassung einer spezifischen Situation realisiert wird, in der ein Drittfahrzeug durch das globale Lichtbündel (28) geblendet werden kann, und ein Zielbereich im globalen Bündel bestimmt wird, der das Drittfahrzeug einschließt, **dadurch gekennzeichnet, dass** dann durch die Scheinwerfer getragene Beleuchtungsmittel (4, 6) identifiziert werden, die die Bündelteile realisieren, die die Beleuchtung des Zielbereichs gewährleisten, und wobei eine Bewegung der im vorherigen Schritt identifizierten Beleuchtungsmittel so gesteuert wird, dass ein dem Zielbereich entsprechender Bereich (40) geringerer Beleuchtung geschaffen wird, wobei der Bereich (30) hoher Beleuchtungsintensität dann in zwei Unterbereiche (30a, 30b) unterteilt wird, die auf beiden Seiten des Bereichs (40) geringerer Beleuchtung angeordnet sind.

2. Steuerungsverfahren nach einem der vorangehenden Ansprüche, wobei die momentane Geschwindigkeit des Fahrzeugs mit mindestens einem vorbestimmten zweiten Geschwindigkeitsschwellenwert (V2) verglichen wird, dessen Wert höher als der Wert des ersten Geschwindigkeitsschwellenwerts (V1) ist, und wobei, wenn die momentane Geschwindigkeit höher als der zweite Geschwindigkeitsschwellenwert (V2) ist, die Lichtintensität des Bereichs (30) hoher Beleuchtungsintensität durch Überlagerung anderer Bündelteile und durch Konzentration des globalen Lichtbündels erhöht wird.

3. Steuerungsverfahren nach einem der Ansprüche 1 oder 2, wobei in einem Fahrbahnausschnitt in der Fahrzeugumgebung die Erfassung einer spezifischen Situation realisiert wird, in der das Fahrzeug mit einer Kurve konfrontiert ist, und wobei in Abhängigkeit von den Kurvenmerkmalen ein zweiter Zielbereich im globalen Bündel bestimmt wird, wobei dann durch den Scheinwerfer getragene Beleuchtungsmittel (4, 6) identifiziert werden, die die Bündelteile realisieren, die die Beleuchtung des zweiten Zielbereichs gewährleisten, wobei eine Bewegung der im vorherigen Schritt identifizierten Beleuchtungsmittel so gesteuert wird, dass ein dem zweiten Zielbereich entsprechender zweiter Bereich (36) hoher Beleuchtungsintensität geschaffen wird.

4. Steuerungsverfahren nach einem der vorangehenden Ansprüche, **dadurch gekennzeichnet, dass** bei der Erfassung, dass die spezifische Situation beendet ist, die Beleuchtungsmittel (4, 6) so gesteuert werden, dass sie jeweils eine Position einnehmen, die dazu geeignet ist, das erste spezifische globale Lichtbündel (31) zu erzeugen.

5. Steuerungsverfahren nach einem der vorangehenden Ansprüche, **dadurch gekennzeichnet, dass** die Beleuchtungsmittel Lichtquellen (4) und jeweils mit mindestens einer der Lichtquellen verbundene optische Ablenkmittel (6) umfassen, wobei das Einschalten jeder Lichtquelle einzeln gesteuert wird, während die Bewegung der optischen Ablenkmittel einzeln gesteuert wird.

6. Verfahren nach einem der vorangehenden Ansprüche, wobei die Bündelteile (23) aus nebeneinanderliegenden vertikalen Segmenten bestehen, wobei die Bewegung der Beleuchtungsmittel (4, 6) die Bewegung mindestens eines der Segmente und seine Überlagerung mit anderen Segmenten des globalen Lichtbündels erzeugt.

7. Kraftfahrzeugbeleuchtungssystem mit einem linken Scheinwerfer und einem rechten Scheinwerfer, die jeweils mindestens ein Lichtmodul zur Durchführung des Steuerungsverfahrens nach einem der vorangehenden Ansprüche umfassen, wobei das mindestens eine Lichtmodul eine Lichtquelle (4) und beweglich montierte optische Ablenkmittel (6) umfasst.

8. Kraftfahrzeugbeleuchtungssystem nach Anspruch 7, **dadurch gekennzeichnet, dass** es ferner ein optisches System (8) zum Emittieren eines Lichtbündels umfasst, wobei die optischen Ablenkmittel (6) zwischen der Lichtquelle und dem optischen System angeordnet sind.

9. Kraftfahrzeugbeleuchtungssystem nach einem der Ansprüche 7 bis 8, **dadurch gekennzeichnet, dass** die optischen Ablenkmittel (6) aus elektromechanischen optischen Mikrosystemen (14, 16) bestehen, die zwischen zwei Endpositionen drehbar montiert sind.

10. Kraftfahrzeugbeleuchtungssystem nach einem der Ansprüche 7 bis 9, das ferner zumindest Folgendes umfasst: Mittel zur Erfassung der momentanen Geschwindigkeit des Fahrzeugs, Mittel zur Analyse der empfangenen Erfassungsinformationen und Berechnungsmittel, die zumindest Mittel zum Vergleichen der momentanen Geschwindigkeit mit mindestens einem vorbestimmten Schwellenwert umfassen, um einen Befehl zur Bewegung der optischen Ablenkmittel (6) zu geben.

## Claims

1. Method for controlling an overall light beam (28) emitted by a motor vehicle headlight and formed of beam portions (23) able to be activated selectively and produced independently of one another by illumination means (4, 6) borne by said headlight, all of the portions forming an overall light beam when they are all activated and arranged successively side by side, wherein the instantaneous speed of the vehicle is compared to a first predetermined speed threshold (V₁), wherein a high-intensity illumination zone (30) to be produced is determined when the instantaneous speed is greater than the first predetermined speed threshold, wherein detection means are used to identify which of said illumination means (4, 6) produce the beam portions (23) suitable for illuminating said high-intensity illumination zone (30), and wherein a movement of said illumination means, identified in the preceding step, and of the illumination means directly adjacent to said illumination means, identified in the preceding step, is driven so as to create a first specific overall light beam (31) comprising said high-intensity illumination zone (30), said illumination means being moved so as to bring about an at least partial superposition of the beam portions produced by these identified illumination means, in the high-intensity illumination zone, wherein all of said illumination means (4, 6) are kept switched on and wherein all of the beam portions (23) are moved so as to maintain switching-on continuity on either side of the high-intensity illumination zone (30), wherein the orientation of the movement of the vehicle is detected, and wherein, when a straight-line driving situation is detected, said high-intensity illumination zone (30) is positioned, by superposing beam portions, substantially in the centre of the first specific overall light beam (31), wherein detection is carried out, on a road scene in the vicinity of the vehicle, with regard to a specific situation in which a third-party vehicle is liable to be dazzled by said overall light beam (28), and a target zone is determined in said overall beam including said third-party vehicle, **characterized in that** illumination means (4, 6) borne by said headlight that produce the beam portions that illuminate said target zone are then identified, and wherein a movement of said illumination means identified in the preceding step is driven so as to create a less illuminated zone (40) corresponding to said target zone, said high-intensity illumination zone (30) then being divided into two sub-zones (30a, 30b) that are positioned on either side of said less illuminated zone (40).

2. Control method according to one of the preceding claims, wherein the instantaneous speed of the vehicle is compared to at least one second predetermined speed threshold (V₂), having a value greater than the value of said first speed threshold (V₁), and wherein, when the instantaneous speed is greater than said second speed threshold (V₂), the light intensity of said high-intensity illumination zone (30) is increased by superposing other beam portions and by concentrating the overall light beam.

3. Control method according to either of Claims 1 and 2, wherein detection is carried out, on a road scene in the vicinity of the vehicle, with regard to a specific situation in which the vehicle is confronted with a bend, and a second target zone is determined in said overall beam on the basis of the characteristics of the bend, wherein illumination means (4, 6) borne by said headlight that produce the beam portions that illuminate said second target zone are then identified, and wherein a movement of said illumination means identified in the preceding step is driven so as to create a second high-intensity illumination zone (36) corresponding to said second target zone.

4. Control method according to one of the preceding claims, **characterized in that** the illumination means (4, 6) are driven, when it is detected that said specific situation has ended, so as to respectively adopt a position able to create said first specific overall light beam (31).

5. Control method according to one of the preceding claims, **characterized in that** said illumination means comprise light sources (4) and optical deflection means (6) associated respectively with at least one of the light sources, each light source being controlled individually in terms of being switched on, while said optical deflection means are controlled individually in terms of movement.

6. Method according to one of the preceding claims, wherein the beam portions (23) consist of vertical segments that are juxtaposed with one another, the movement of the illumination means (4, 6) generating the movement of at least one of said segments and its superposition on other segments of the overall light beam.

7. Motor vehicle lighting system comprising a left-hand headlight and a right-hand headlight, each comprising at least one lighting module for implementing the control method according to one of the preceding claims, which at least one lighting module comprises a light source (4) and optical deflection means (6) mounted so as to be able to move.

8. Motor vehicle lighting system according to Claim 7, **characterized in that** it furthermore comprises an optical system (8) for emitting a light beam, the optical deflection means (6) being interposed between the light source and the optical system.

9. Motor vehicle lighting system according to either of Claims 7 and 8, **characterized in that** the optical deflection means (6) consist of optical microelectromechanical systems (14, 16) mounted so as to be able to rotate between two end positions.

10. Motor vehicle lighting system according to one of Claims 7 to 9, furthermore comprising at least means for detecting the instantaneous speed of the vehicle, means for analysing received detection information and computing means, comprising at least means for comparing the instantaneous speed with at least one predetermined threshold, in order to give a command instruction to move the optical deflection means (6).
